# FASCICULE DE BREVET EUROPEEN

(11) **EP 0 519 838 B1**
(45) Date de publication et mention de la délivrance du brevet: **15.04.1998**
(21) Numéro de dépôt: 92401732.0
(22) Date de dépôt: 19.06.1992
(51) Int. Cl.: G06F 15/02, G08B 5/22

(54) **Installation de mise à jour à distance les agendas de poche électroniques**
Anlage zur Fern-Aktualisierung von elektronischen Notizbüchern
Device for remotely updating electronic notebooks

(30) Priorité: 21.06.1991 FR 9107675
(43) Date de publication de la demande: 23.12.1992
(73) Titulaire: Lewiner, Jacques, 92210 Saint-Cloud (FR); Carreel, Eric, F-75015 Paris (FR)
(72) Inventeur: Lewiner, Jacques, 92210 Saint-Cloud (FR); Carreel, Eric, F-75015 Paris (FR)
(74) Mandataire: Burbaud, Eric

(56) Documents cités:
- EP-A- 0 434 231
- WO-A-90/13213
- FR-A- 2 634 607

## Description

L'invention est relative aux agendas électroniques de poche, c'est-à-dire aux supports d'information portatifs suffisamment légers et peu encombrants pour pouvoir être mis en poche et agencés de façon à pouvoir enregistrer électroniquement et afficher des informations relatives à l'emploi du temps de leurs porteurs.

Elle concerne plus particulièrement les installations pour mettre à jour à distance ces agendas de poche.

Il existe actuellement des agendas électroniques plus ou moins portatifs -c'est-à-dire comportant au moins un élément portatif et appelés pour cette raison "agendas de poche" dans ce qui suit- comprenant :
- des moyens d'enregistrement électronique, comprenant eux-mêmes des mémoires appropriées et desservis par appui des différentes touches d'un clavier, propres à enregistrer d'une part des données fixes d'agenda propres à identifier toute sous-période désirable -s'étendant par exemple sur une journée- comprise dans une période plus longue s'étendant par exemple sur un mois, un semestre ou une année, et d'autre part des données variables de rendez-vous,
- des moyens d'affichage de ces différentes données comprenant un écran,
- et des moyens de balayage ou sélection permettant d'afficher sélectivement lesdites données sur ledit écran.

Ces agendas de poche permettent l'inscription de rendez-vous ou autres indications liés à l'emploi du temps de leurs porteurs sans qu'il soit nécessaire à ceux-ci de recourir à un support papier ni à un instrument d'écriture du type des crayons ou stylos.

Il existe également des installations permettant de mettre à jour à distance ces agendas de poche, installations comprenant des moyens pour élaborer des signaux électriques codés représentatifs de l'adresse de l'agenda de poche à mettre à jour et de premières données de rendez-vous à inscrire sur cet agenda de poche, signaux transportables par des messages radio, lesdits moyens coopérant avec un service de radiomessagerie agencé de façon à recevoir lesdits signaux électriques, à élaborer à partir de ceux-ci des messages radio permettant de transporter lesdits signaux, et à émettre lesdits messages radio vers l'agenda de poche.

De telles installations permettent une mise à jour permanente et complète de l'agenda de poche, laquelle tient compte non seulement des premières données de rendez-vous ci-dessus, qui lui sont transmises à distance, mais aussi d'autres données de rendez-vous qui peuvent être introduites localement dans cet agenda de poche par son porteur -et qui ont éventuellement pour effet d'effacer certaines des premières données de rendez-vous préalablement enregistrées-, l'ensemble des données de rendez-vous finalement enregistrées sur l'agenda de poche étant désigné ci-après par l'expression "secondes données de rendez-vous".

Dans les modes de réalisation connus de ces installations (document WO-A-90/13213), rien n'est prévu pour tenir compte des secondes données de rendez-vous au niveau du poste d'émission à distance des premières données de rendez-vous.

Il est donc nécessaire que, chroniquement, le porteur de l'agenda de poche reprenne contact avec ce poste d'émission afin de lui communiquer les modifications intervenues localement sur les données de rendez-vous enregistrées dans son agenda.

Ces manoeuvres, qui font appel généralement à des échanges verbaux ou tout au moins à des manipulations manuelles telles que la frappe d'un clavier, sont fastidieuses et prennent du temps.

L'invention a pour but, surtout, de les simplifier en les rendant quasi-automatiques.

A cet effet une installation de mise à jour d'un agenda électronique de poche du genre en question selon l'invention comme définie dans la revendication 1 est essentiellement caractérisée en ce qu'elle se présente sous la forme d'un poste fixe formant agenda de bureau, poste comprenant lui-même des moyens d'enregistrement et d'affichage semblables à ceux compris par l'agenda de poche et se prêtant à l'enregistrement et à l'affichage sur place, d'une part, de données d'agenda et, d'autre part, des premières données de rendez-vous ci-dessus aux emplacements temporels qui leur conviennent parmi lesdites données d'agenda, et des moyens de mise à jour sur place propres à mettre à jour automatiquent lesdites premières données de rendez-vous à partir de l'ensemble des données de rendez-vous enregistrées dans l'agenda de poche, ensemble constituant des secondes données de rendez-vous, en enregistrant automatiquement ces secondes données de rendez-vous à leurs emplacements temporels corrects dans l'agenda de bureau.

Dans des modes de réalisation préférés, on a recours en outre à l'une et/ou à l'autre des dispositons suivantes :
- les moyens de mise à jour sur place de l'agenda de bureau comprennent un émetteur à fréquences vocales prévu dans l'agenda de poche, propre à émettre localement des messages sonores représentatifs des secondes données de rendez-vous enregistrées dans ledit agenda de poche et à coopérer, d'une part, avec un émetteur téléphonique placé en position d'écoute desdits messages sonores et, d'autre part, avec un dispositif de réception de ces messages sonores associé au poste fixe, dispositif coopérant lui-même avec un central téléphonique à la façon des modems,
- les moyens de mise à jour sur place de l'agenda de bureau comprennent un boîtier de lecture prévu au poste fixe, propre à recevoir l'agenda de poche et muni de moyens de connexion et de traitement appropriés permettant de lire les secondes données de rendez-vous enregistrées dans ledit agenda de poche,
- le boîtier ci-dessus est équipé de moyens agencés de façon à recharger automatiquement la source de courant électrique de l'agenda de poche lorsque ce dernier est introduit dans ledit boîtier,
- les connexions entre le boîtier ci-dessus et l'agenda de poche sont réalisées de manière immatérielle.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

La figure 1, de ce dessin, montre très schématiquement un agenda électronique de poche susceptible d'être mis à jour à distance ainsi qu'une installation établie conformément à l'invention pour effectuer une telle mise à jour.

La figure 2 est un schéma des différents circuits compris par l'agenda de poche ci-dessus.

La figure 3 montre un dispositif qui peut être utilisé, conformément à l'invention, pour la mise à jour automatique, à partir de l'agenda de poche lui-même, de l'agenda de bureau compris par le poste fixe affecté à la mise à jour dudit agenda de poche.

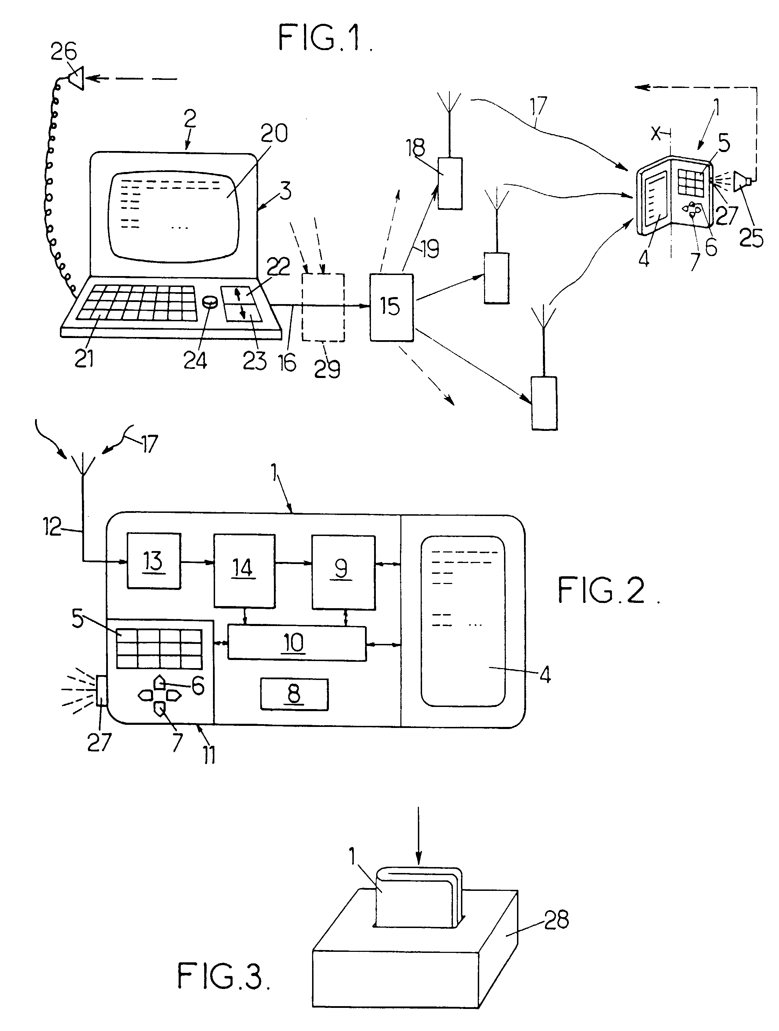

Sur le schéma général représenté à la figure 1, on voit en 1 un agenda électronique de poche que l'on désire pouvoir mettre à jour à distance à partir d'un poste fixe éloigné 2 constituant un agenda électronique de bureau 3.

Cet agenda 1 présente un encombrement et un poids suffisamment réduits pour pouvoir être placé dans la poche d'un porteur appelé à se déplacer loin du poste 2, voire à plusieurs centaines de kilomètres de celui-ci.

Ledit agenda 1 comprend avantageusement deux volets rigides montés pivotants l'un sur l'autre autour d'une charnière d'axe X, volets dont l'un porte un écran d'affichage 4 du type par exemple à cristaux liquides alors que l'autre volet porte un ensemble de touches 5 réparties selon un clavier ou autrement et affectées respectivement aux chiffres, aux lettres de l'alphabet et à un certain nombre de missions simples telles qu'une mise sous tension ou hors tension...

L'ensemble de ces touches 5 est en outre côtoyé par au moins deux touches 6 et 7 permettant de faire défiler respectivement dans les deux sens opposés possibles les données d'agenda affichées sur l'écran 4 afin de placer à volonté sur cet écran la tranche de temps désirée par le porteur, tranche correspondant notamment à une journée complète.

Sur la figure 2, on a représenté d'une façon schématique les différents composants électroniques de l'agenda 1, logés respectivement dans les épaisseurs de ses deux volets constitutifs.

Ces composants comprennent en premier lieu, d'une façon connue en soi, en plus de l'écran d'affichage 4 :
- une source de courant électrique 8,
- une mémoire 9,
- un micro-ordinateur 10,
- et une interface locale 11 permettant au porteur de l'agenda d'exécuter un certain nombre de commandes.

La source de courant électrique 8 est constituée par une petite pile ou par une batterie rechargeable.

La mémoire 9 est propre à enregistrer :
- d'une part, des données d'agenda prédéterminées se rapportant à un découpage du temps en tranches et couvrant une période future, généralement de l'ordre de six mois ou d'une année, ces données se présentant sous la forme d'une succession d'indications propres à identifier les différents jours compris par la période concernée et, le cas échéant, certaines des heures comprises par les jours en question, heures généralement comprises entre 8 h du matin et 21 h, les données d'agenda en question comprenant au minimum les quantièmes des mois et les quantièmes des jours compris par ces mois,
- et, d'autre part, des données de "rendez-vous" permettant d'identifier "des rendez-vous" ou autres activités affectées à des tranches de temps déterminées et comprenant en général, en plus de l'heure exacte, si celle-ci ne fait pas partie des données d'agenda préenregistrées, un mot d'identification, tel qu'un nom, et un lieu.

L'interface locale 11 comprend en particulier quant à elle, le clavier à touches 5 correspondant respectivement aux dix chiffres de la numéroration décimale et, dans les modes de réalisation préférés, aux vingt-six caractères de l'alphabet occidental (ou aux idéogrammes correspondants si la langue pratiquée par le porteur de l'agenda ne s'écrit pas avec lesdits caractères) et au moins les deux boutons de commande 6,7 permettant de faire défiler respectivement dans les deux sens possibles, c'est-à-dire vers l'avenir ou vers le passé, les données d'agenda affichées sur l'écran 4.

Le porteur de l'agenda peut ainsi inscrire à volonté sur celui-ci un rendez-vous prévu pour une heure donnée Hₒ d'un jour donné Jₒ.

Il lui suffit à cet effet :
- d'actionner les boutons 6 et 7 de façon à placer en sa position se prêtant à une inscription à ladite heure Hₒ la portion, de l'ensemble composé par les données d'agenda préenregistrées dans la mémoire 9, qui est momentanément affichée sur l'écran 4,
- puis de composer à l'aide des touches 5 le message en clair qui doit être inscrit.

L'agenda 1 ici considéré comprend en outre des composants qui rendent possible sa mise à jour automatique à distance, indépendamment du porteur lui-même.

Ces derniers composants comprennent :
- une antenne réceptrice 12,
- un circuit récepteur 13 raccordé à l'antenne 16,
- et un circuit 14 de décodage des signaux provenant du récepteur 13.

L'antenne réceptrice 12 est incorporée à l'agenda pour faciliter les manipulations de celui-ci.

Le circuit récepteur 13 est agencé de façon à détecter, parmi les ondes hertziennes environnantes captées par l'antenne 12, celles qui sont affectées d'un code adresse prédéterminé, et à être activé par les ondes ainsi détectées.

Le circuit 14 est agencé de façon à élaborer, à partir des signaux provenant du récepteur 13, des "données de rendez-vous" à inscrire sur l'agenda 1, données du même genre que celles élaborées à partir du clavier 5, et il est associé à la mémoire 9 et au micro-ordinateur 10 de façon à enregistrer automatiquement lesdites données de rendez-vous aux emplacements temporels qui leur correspondent parmi les données d'agenda préenregistrées.

On notera que ce type d'enregistrement diffère légèrement de celui effectué par le porteur lui-même par actionnement du clavier 5, puisque la tranche de temps concernée par le rendez-vous à inscrire ne doit être affichée sur l'écran 4 que dans le second cas.

Pour ce qui est des moyens adoptés pour élaborer et transmettre à distance à l'agenda 1 les messages de mise à jour des rendez-vous, on leur fait comprendre :
- d'une part, le poste fixe 2 évoqué ci-dessus, constituant agenda de bureau 3, agencé de façon à élaborer des signaux électriques codés représentatifs, d'une part, de l'adresse de l'agenda 1 et, d'autre part, de données de rendez-vous à incrire sur ce dernier, signaux faciles à transformer en messages radio,
- et, d'autre part, un service de radiomessagerie 15 agencé de façon à recevoir lesdits signaux électriques par l'intermédiaire d'une ligne téléphonique appropriée 16, à élaborer à partir de ceux-ci des messages radio 17 et à émettre ces derniers vers l'agenda 1 à partir d'émetteurs hertziens 18, eux-mêmes connectés au service 15, par exemple par l'intermédiaire de lignes téléphoniques 19 et répartis sur l'ensemble du territoire dans lequel le porteur de l'agenda 1 est appelé à circuler.

Les messages radio en question sont en général émis sur des fréquences comprises entre 80 et 500 MHz.

Le service 15-19 est en général un organisme public offrant ses services à la clientèle sous la forme d'attribution de codes d'identification dans le cadre d'abonnements.

Il peut être secondé par un service intermédiaire schématisé par le poste 29, agencé de façon à regrouper et gérer les signaux provenant de la ligne 16 et d'autres lignes semblablement desservies, ledit poste 29 comprenant des dispositifs de réception, de traitement et d'émission appropriés et étant consultable à distance par les usagers des postes fixes 2, notamment à partir de terminaux télématiques du type de ceux connus sous la désignation commerciale "Minitel" associés auxdits postes fixes.

L'agenda de bureau 3 prévu au poste fixe 2 est un agenda électronique du même genre que l'agenda de poche 1, mais il peut faire appel à des matériels plus lourds et plus encombrants comportant notamment un écran 20 du type des écrans vidéo et un clavier de desserte 21 du genre de ceux équipant les machines à écrire.

Cet agenda de bureau 3 comprend également des moyens de mémoire, de calcul et de traitement permettant l'enregistrement de données d'agenda et de données de rendez-vous, ainsi que des touches 22,23 permettant de faire défiler à volonté sur l'écran 20 les indications identifiant les tranches de temps successives enregistrées dans l'agenda.

Ledit agenda de bureau 3 se prête ainsi, tout comme l'agenda de poche 1, à l'enregistrement et à l'affichage des données de rendez-vous composées sur place, notamment par la secrétaire du porteur de l'agenda de poche.

Tout nouveau rendez-vous pris par la secrétaire ou analogue peut ainsi être enregistré sur chacun des deux agendas de poche 1 et de bureau 3.

Pour faciliter la mise à jour automatique à distance de l'agenda de poche, juste après la prise et l'enregistrement local de chaque nouveau rendez-vous, on prévoit avantageusement sur le poste 2 un bouton 24 dont l'appui assure automatiquement une transmission à l'agenda de poche 1, par le biais de la chaîne 15-19 ci-dessus décrite, de la totalité des données correspondant au nouveau rendez-vous pris, avec enregistrement automatique de ces données dans ledit agenda de poche.

Pour compléter l'installation qui vient d'être décrite et qui permet de mettre à jour à distance l'agenda de poche 1 à partir du poste fixe 2, quelle que soit la distance qui sépare ces deux unités, on prévoit en outre une certaine réciprocité, à savoir :
- non seulement un simple retour d'information de l'agenda de poche 1 vers le poste fixe 2 pour signifier la bonne réception des messages de mise à jour envoyés par ce dernier,
- mais en plus, une mise à jour de l'agenda de bureau 3 lui-même à partir des nouveaux rendez-vous enregistrés et/ou effacés dans l'agenda de poche 1, c'est-à-dire un enregistrement automatique des données de rendez-vous de l'agenda de poche à leurs emplacements temporels corrects de l'agenda de bureau.

De nombreuses solutions peuvent être envisagées pour établir ces communications en sens inverse des précédentes.

Selon un premier mode de réalisation, l'agenda de poche 1 comprend lui-même des moyens 27 propres à émettre sur place, selon le principe des "fréquences vocales", des signaux sonores de numérotation et à coopérer, d'une part, avec un émetteur téléphonique 25 placé en position d'écoute desdits signaux de numérotation et, d'autre part, avec un central téléphonique, cet ensemble permettant de réaliser une liaison téléphonique avec un récepteur approprié 26 compris par l'agenda de bureau 3.

Lorsque cette liaison téléphonique est établie, c'est-à-dire lorsque l'agenda de bureau a détecté un appel et décroché la ligne, un signal sonore est envoyé par l'agenda de bureau à l'agenda de poche.

L'agenda de poche détecte ce signal et peut alors assurer le transfert de ses données de rendez-vous (données enregistrées dans ledit agenda de poche) selon le principe d'un codage par fréquences vocales à la façon des modems ou des récepteurs de télécopie.

Selon un second mode de réalisation, on prévoit au poste fixe 2 un boîtier de lecture 28 (figure 3) propre à recevoir l'agenda de poche 1 et muni de moyens de connexion et de traitement appropriés permettant de lire les données de rendez-vous enregistrées dans ledit agenda de poche.

Pour ce second mode de réalisation, la liaison entre le boîtier 28 et l'agenda de poche 1 peut encore être réalisée de la manière décrite à propos du premier mode de réalisation, le boîtier jouant alors un rôle analogue à celui du récepteur 26 ci-dessus.

Mais ladite liaison entre le boîtier et l'agenda de poche peut être prévue de manière moins coûteuse en établissant une laison électrique entre un connecteur électrique de l'agenda de poche 1 et un connecteur électrique du boîtier 28.

Lorsque l'agenda de poche risque d'être soumis à des contraintes d'environnement (humidité ou ruissellement) sévères, la liaison entre le boîter et l'agenda de poche peut également être réalisée en établissant une liaison sans contact entre l'agenda de poche et le boîtier de façon à s'affranchir des éventuels problèmes liés à la présence de contacts électriques apparents sur un objet portable : cette liaison immatérielle peut être d'une manière connue en soi capacitive, magnétique ou optique.

Le boîtier 28 est avantageusement muni de moyens (non représentés) propres à recharger automatiquement la source de courant électrique 8 de l'agenda de poche 1 lorsque cet agenda est introduit dans ledit boîtier.

Bien entendu, chacune de ces formules de "retour" adoptées pour mettre à jour l'agenda de bureau à partir de l'agenda de poche peut être exploitée à des fins de vérification pour confirmer que les données de rendez-vous antérieurement envoyées du poste fixe à l'agenda de poche ont correctement été reçues et enregistrées dans ce dernier.

Pour réduire le risque de défaut d'un tel enregistrement, dû par exemple au fait que le porteur de l'agenda de poche est momentanément placé dans une "cage de Faraday", les services de radiomessagerie réémettent en général plusieurs fois à l'identique les messages qui leur sont confiés, avec des intervalles de temps suffisants entre les émissions successives.

Des moyens d'alarme (non représentés) peuvent être prévus sur l'agenda de poche 1 pour aviser le porteur de cet agenda d'une éventuelle collision entre un nouveau rendez-vous à inscrire et un rendez-vous déjà inscrit : l'alarme en question, qui se traduit par exemple par l'émission d'un "bip" sonore, a notamment pour conséquence d'inciter le porteur de l'agenda de poche à prendre immédiatement contact avec sa secrétaire pour débrouiller la situation.

En suite de quoi, et quel que soit le mode de réalisation adopté, on dispose finalement d'une installation permettant de mettre à jour à distance des agendas de poche, installations dont la constitution, le fonctionnement et les avantages résultent suffisamment de ce qui précède.

## Revendications

1. Installation pour élaborer et transmettre à distance des données de rendez-vous à un agenda électronique de poche (1) aux fins de mise à jour de ce dernier, comprenant des moyens pour élaborer des signaux électriques codés représentatifs de l'adresse de l'agenda de poche à mettre à jour et de premières données de rendez-vous à inscrire sur cet agenda de poche, signaux transportables par des messages radio, lesdits moyens coopérant avec un service de radiomessagerie (15-19) agencé de façon à recevoir lesdits signaux électriques, à élaborer à partir de ceux-ci des messages radio permettant de transporter lesdits signaux, et à émettre lesdits messages vers l'agenda de poche, caractérisée en ce qu'elle se présente sous la forme d'un poste fixe (2) formant agenda de bureau (3), poste comprenant lui-même des moyens d'enregistrement et d'affichage semblables à ceux compris par l'agenda de poche et se prêtant à l'enregistrement et à l'affichage sur place, d'une part, de données d'agenda et, d'autre part, des premières données de rendez-vous ci-dessus aux emplacements temporels qui leur conviennent parmi lesdites données d'agenda, et des moyens de mise à jour sur place propres à mettre à jour automatiquement lesdites premières données de rendez-vous à partir de l'ensemble des données de rendez-vous enregistrées dans l'agenda de poche (1), ensemble constituant des secondes données de rendez-vous, en enregistrant automatiquement ces secondes données de rendez-vous à leurs emplacements temporels corrects dans l'agenda de bureau (3).

2. Installation selon la revendication 1, caractérisée en ce que les moyens de mise à jour sur place de l'agenda de bureau (3) comprennent un émetteur à fréquences vocales (27) prévu dans l'agenda de poche (1), propre à émettre localement des messages sonores représentatifs des secondes données de rendez-vous enregistrées dans ledit agenda de poche et à coopérer, d'une part, avec un émetteur téléphonique placé en position d'écoute desdits messages sonores et, d'autre part, avec un dispositif de réception de ces messages sonores associé au poste fixe (2), dispositif coopérant lui-même avec un central téléphonique à la façon des modems.

3. Installation selon l'une quelconque des revendications 1 et 2, caractérisée en ce que les moyens de mise à jour sur place de l'agenda de bureau (3) comprennent un boîtier de lecture (28) prévu au poste fixe (2), propre à recevoir l'agenda de poche (1) et muni de moyens de connexion et de traitement appropriés permettant de lire les secondes données de rendez-vous enregistrées dans ledit agenda de poche.

4. Installation selon la revendication 3, caractérisée en ce que les connexions entre le boîtier (28) et l'agenda de poche (1) sont réalisées de manière immatérielle.

5. Installation selon l'une quelconque des revendications 3 et 4, caractérisée en ce que le boîtier (28) est équipé de moyens agencés de façon à recharger automatiquement la source de courant électrique de l'agenda de poche (1) lorsque ce dernier est introduit dans ledit boîtier.

## Patentansprüche

1. Anlage zur Fern-Ausarbeitung und -Übertragung von Verabredungsdaten an ein elektronisches Taschennotizbuch (1) zu dessen Aktualisierung, die Mittel zur Ausarbeitung kodierter elektrischer Signale umfaßt, welche die Adresse des zu aktualisierenden Notizbuchs und erste, in dieses Taschennotizbuch einzutragende Verabredungsdaten darstellen und die über Funkmeldungen transportierbar sind, wobei die Mittel mit einem Funkdienst (15 - 19) zusammenarbeiten, der so ausgelegt ist, daß er die elektrischen Signale empfängt, von diesen ausgehend den Transport der Signale gestattende Funkmeldungen erarbeitet und die Meldungen an das Taschennotizbuch sendet, dadurch gekennzeichnet, daß die Anlage als ortsfestes Gerät (2) in Gestalt eines Büronotizbuchs (3) ausgebildet ist, das selbst Mittel zur Aufzeichnung und Anzeige ähnlich denen des Taschennotizbuchs aufweist und das geeignet ist, an Ort und Stelle Notizbuchdaten einerseits und die obengenannten ersten Verabredungsdaten andererseits an den zeitlichen, ihnen unter den Verabredungsdaten passend erscheinenden Plätzen aufzuzeichnen und anzuzeigen, und Mittel zur Aktualisierung an Ort und Stelle, die geeignet sind, ausgehend von der zweite Verabredungsdaten darstellenden Gesamtheit der in dem Taschennotizbuch (1) aufgezeichneten Verabredungsdaten automatisch die ersten Verabredungsdaten zu aktualisieren, indem sie diese zweiten Verabredungsdaten automatisch an ihren in dem Büronotizbuch (3) korrekten, zeitlichen Plätzen aufzeichnet.

2. Anlage nach Anspruch 1, dadurch gekennzeichnet, daß die Mittel des Büronotizbuchs (3) zur Aktualisierung an Ort und Stelle einen in dem Taschennotizbuch (1) vorgesehenen, tonfrequenten Sender (27) umfassen, der geeignet ist, Lautsprechermitteilungen, die in dem Taschennotizbuch aufgezeichnete, zweite Verabredungsdaten darstellen, lokal zu senden, und einerseits mit einem Telefonsender, der in einer Position zum Empfang der Lautsprechermitteilungen angeordnet ist, und andererseits mit einer dem ortsfesten Gerät (2) zugeordneten Vorrichtung zum Empfang dieser Lautsprechermitteilungen zusammenwirkt, die selbst mit einer Telefonzentrale modemartig zusammenwirkt.

3. Anlagen nach einem der Ansprüche 1 und 2, dadurch gekennzeichnet, daß die Mittel des Büronotizbuchs (3) zur Aktualisierung an Ort und Stelle ein an dem ortsfesten Gerät (2) vorgesehenes Lesebox (28) umfassen, die geeignet ist, das Taschennotizbuch (1) aufzunehmen, und die mit geeigneten Verbindungs- und Bearbeitungsmitteln versehen ist, die es ermöglichen, die in dem Taschennotizbuch aufgezeichneten, zweiten Verabredungsdaten zu lesen.

4. Anlage nach Anspruch 3, dadurch gekennzeichnet, daß die Verbindungen zwischen dem Gehäuse (28) und dem Taschennotizbuch (1) immateriell ausgeführt sind.

5. Anlage nach einem der Ansprüche 3 und 4, dadurch gekennzeichnet, daß das Gehäuse (28) mit Mitteln versehen ist, die so angeordnet sind, daß sie die Stromquelle des Taschennotizbuchs (1) automatisch wiederaufladen, wenn dieses in das Gehäuse eingesetzt ist.

## Claims

1. Installation for generating and remotely transmitting appointment data to an electronic diary (1) in order to update the latter, comprising means for generating coded electric signals representing the address of the diary to be updated and first appointment data to be entered in this diary, wherein the said signals can be transmitted by radio messages, the said means cooperating with a radio paging service (15-19) adapted to receive the said electric signals, to generate from the latter radio messages for transmitting the said signals and to transmit the said messages to the diary, characterised in that it is a fixed station (2) forming a desk diary (3), the said station itself comprising recording and display means similar to those of the diary and suitable for the in situ recording and display, on the one hand. of diary data and, on the other hand, of the abovementioned first appointment data at suitable time-division locations among the said diary data, and in situ updating means capable of automatically updating the said first appointment data from all of the appointment data recorded in the diary (1), the entirety forming second appointment data, by automatically recording these second appointment data at their correct time-division locations in the desk diary (3).

2. Installation according to claim 1, characterised in that the in situ updating means of the desk diary (3) comprise a voice-frequency transmitter (27) provided in the diary (1) capable of locally transmitting audible messages representing second appointment data recorded in the said diary and cooperating, on the one hand, with a telephone transmitter disposed in a position for monitoring the said audible messages and, on the other hand, with a device for receiving these audible messages associated with the fixed station (2), the said device itself cooperating with a telephone exchange in the manner of a modem.

3. Installation according to either of claims 1 and 2, characterised in that the in situ updating means of the desk diary (3) comprise a reading unit (28) provided at the fixed station (2) capable of receiving the diary (1) and provided with appropriate connection and processing means for reading the second appointment data recorded in the said diary.

4. Installation according to claim 3, characterised in that the connections between the unit (28) and the diary (1) are produced immaterially.

5. Installation according to either of claims 3 and 4, characterised in that the unit (28) is provided with means adapted to automatically recharge the electric current source of the diary (1) when the latter is introduced into the said unit.
